# EUROPEAN PATENT APPLICATION

(11) **EP 2 241 726 A2**
(43) Date of publication of application: **20.10.2010**
(21) Application number: 10159015.6
(22) Date of filing: 01.04.2010
(51) Int. Cl.: F01D 17/02, F01D 21/00, G05B 23/02

(54) **A method for the repair of an engine and corresponding systems for monitoring this engine**

(30) Priority: 09.04.2009 US 421260
(71) Applicant: General Electric Company, Schenectady, NY 12345 (US)
(72) Inventor: Mazzaro, Maria Cecilia, Erie, PA 16506 (US); Graham, Michael Evans, Slingerlands, NY 12159 (US); Mathews, Jr., Harry Kirk, Niskayuna, NY 12309 (US); McCarthy, Kevin Thomas, Troy, NY 12180 (US); Bleasdale, Donald, Cincinnati, OH 45215 (US); Arora, Dhiraj, Niskayuna, NY 12309 (US); Adhami, Mohammad Waseem, Cincinnati, OH 45215 (US); Trejo, Adriana Elizabeth, QRO 76030, Col El Carrizal (MX)
(74) Representative: Gray, Thomas

(57) **Abstract**

A method for monitoring the health of a turbine (10) is provided. The method comprises monitoring a turbine engine having a plurality of engine modules (28,26,24,22,12,14,16,18) and determining one or more health estimates, which may include trended data, for one or more of the engine modules, based on a plurality of engine parameters. The method further determining and transmitting appropriate notifications that indicate repairs to be made to the turbine engine. A workstation (52) is connected to a turbine analyzer (46) and may be wirelessly connected to it or have a remote access to it.

## Description

### BACKGROUND

The invention relates generally to gas turbine engines, and more particularly to a system and method for monitoring the health of a turbine engine.

As gas turbine engines operate, engine efficiency and performance may deteriorate over time. This degradation of performance may be due to various factors such as engine wear or engine component damage. Measurement of this degradation of performance may be useful in determining what type of maintenance should be performed on the turbine engine to restore the engine to its original operating efficiency. However, false turbine performance readings may result from the failure of turbine performance measuring devices. The failure of these turbine performance measuring devices may lead to erroneous turbine performance data being generated, which may lead to unnecessary maintenance on the turbine. Moreover, existing techniques for measuring engine performance can be tedious to setup and perform, and only provide limited data. Accordingly, there is a need for improved diagnostic systems and methods that reduce false efficiency readings, as well as generate more reliable efficiency readings.

### BRIEF DESCRIPTION

In one embodiment, a method for planning repair of an engine is provided. The method comprises monitoring a turbine engine having a plurality of engine modules and determining one or more engine module health estimates for one or more of the engine modules based on a plurality of engine parameters, wherein the one or more health estimates comprise trended data. The method further comprises determining failure types for the engine modules based on the health estimates and correcting specific failure types.

In another embodiment, a system for monitoring an engine is provided. The system comprises an engine health estimator configured to determine one or more health estimates for one or more modules of the engine based on a plurality of engine parameters, wherein the one or more health estimates comprise trended data. The system further comprises a turbine analyzer configured to analyze the one or more health estimates to determine failure types for the engine modules.

Additionally, a turbine system is provided. The turbine system comprises one or more engine modules adapted to generate rotational motion. The turbine system further comprises one or more sensors adapted to measure engine parameters for the one or more engine modules. Furthermore, the turbine system includes an engine health estimator configured to determine one or more health estimates for the one or more engine modules based the measured engine parameters, wherein the one or more health estimates comprise trended data. Finally, the turbine system includes a turbine analyzer configured to analyze the one or more health estimates to determine failure types for the engine modules.

### DRAWINGS

There follows a detailed description of embodiments of the invention by way of example only with reference to the accompanying drawings, in which:
FIG. 1 is a block diagram of a turbine system in accordance with an embodiment of the present technique;
FIG. 2 is a block diagram of health analysis components for use in monitoring the health of the turbine system of FIG. 1; and
FIG. 3 is a flow chart of illustrating health monitoring of the turbine system of FIG. 1.

### DETAILED DESCRIPTION

Health monitoring of a turbine engine is discussed below. Engine parameters corresponding to modules of the turbine engine may be monitored and measured. These measurements may then be combined into a trend for each of the modules of the engine. The trends may be compared to an engine model that may include model values representing the proper operating levels for each of the modules. Based on the measured values deviation from the model values, an expert tool may predict the type of problem that may be causing the deviation. The expert tool may also generate a recommendation that may be transmitted to a workstation that may permit for efficient rectification of a problem causing the deviation via specific repairs. In this manner, turbine engine that operates at less than an acceptable level of performance may be repaired in a manner that corrects a source problem.

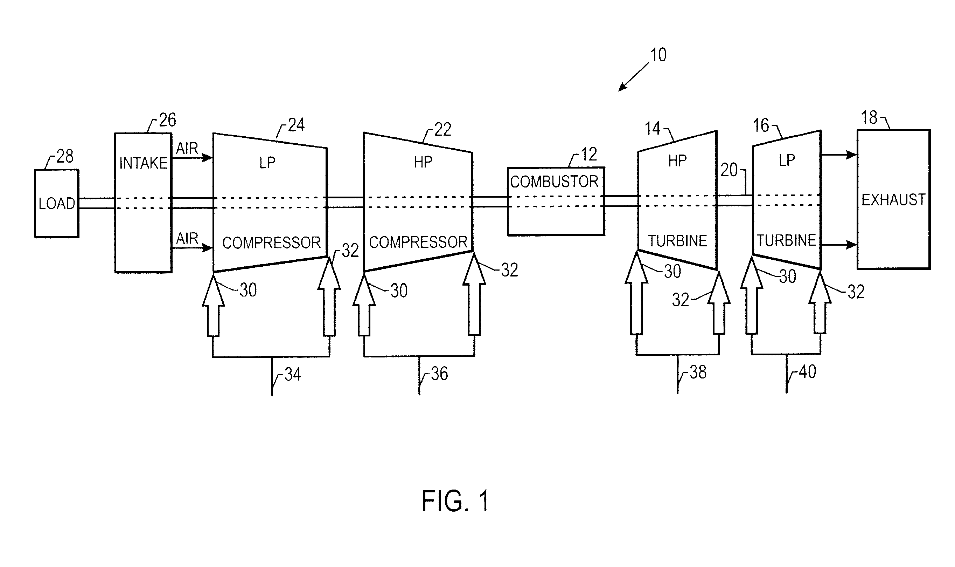

Turning now to the drawings and referring first to FIG. 1, a block diagram of an embodiment of turbine system 10 is illustrated. The turbine system 10 may, for example, be manufactured by General Electric Company of Evendale, Ohio under the designation LM6000. As depicted, the turbine system 10 may include a combustor 12. The combustor 12 may receive fuel that has been mixed with air, for combustion in a chamber within combustor 12. This combustion creates hot pressurized exhaust gases. The combustor 12 directs the exhaust gases through a high pressure (HP) turbine 14 and a low pressure (LP) turbine 16 toward an exhaust outlet 18. The HP turbine 14 may be part of a HP rotor. Similarly, the LP turbine 16 may be part of a LP rotor. As the exhaust gases pass through the HP turbine 14 and the LP turbine 16, the gases force turbine blades to rotate a drive shaft 20 along an axis of the turbine system 10. As illustrated, drive shaft 20 is connected to various components of the turbine system 10, including a HP compressor 22 and a LP compressor 24.

The drive shaft 20 may include one or more shafts that may be, for example, concentrically aligned. The drive shaft 20 may include a shaft connecting the HP turbine 14 to the HP compressor 22 to form a HP rotor. The HP compressor 22 may include blades coupled to the drive shaft 20. Thus, rotation of turbine blades in the HP turbine 14 causes the shaft connecting the HP turbine 14 to the HP compressor 22 to rotate blades within the HP compressor 22. This compresses air in the HP compressor 22. Similarly, the drive shaft 20 includes a shaft connecting the LP turbine 16 to the LP compressor 24 to form a LP rotor. The LP compressor 24 includes blades coupled to the drive shaft 20. Thus, rotation of turbine blades in the LP turbine 16 causes the shaft connecting the LP turbine 16 to the LP compressor 24 to rotate blades within the LP compressor 24. The rotation of blades in the HP compressor 22 and the LP compressor 24 compresses air that is received via the air intake 26. The compressed air is fed to the combustor 12 and mixed with fuel to allow for higher efficiency combustion. Thus, the turbine system 10 may include a dual concentric shafting arrangement, wherein LP turbine 16 is drivingly connected to LP compressor 24 by a first shaft in the drive shaft 20, while the HP turbine 14 is similarly drivingly connected to the HP compressor 22 by a second shaft in the drive shaft 20 internal and concentric to the first shaft. Shaft 20 may also be connected to load 28, which may be a vehicle or a stationary load, such as an electrical generator in a power plant or a propeller on an aircraft. Load 28 may be any suitable device that is powered by the rotational output of turbine system 10.

The engine turbine system 10 may also include a plurality of sensors, configured to monitor a plurality of engine parameters related to the operation and performance of the turbine system 10. The sensors may include, for example, inlet sensors 30 and outlet sensors 32 positioned adjacent to, for example, the inlet and outlet portions of the HP turbine 14, the LP turbine 16, the HP compressor 22, and/or the LP compressor 24, respectively. The inlet sensors 30 and outlet sensors 32 may measure, for example, environmental conditions, such as ambient temperature and ambient pressure, as well as a plurality of engine parameters related to the operation and performance of the turbine system 10, such as, exhaust gas temperature, rotor speeds, engine temperature, engine pressure, gas temperature, engine fuel flow, core speed, compressor discharge pressure, and turbine exhaust pressure. The plurality of sensors 30 and 32 may also be configured to monitor engine parameters related to various operational phases of the turbine system 10. Measurements taken by the plurality of sensors 30 and 32 may be transmitted via module lines 34-40. For example, module line 34 may be utilized to transmit measurements from the LP compressor 24, while module line 36 may be utilized to transmit measurements from the HP compressor 22. In a similar manner, module line 38 may be utilized to transmit measurements from the HP turbine 14, while module line 40 may be utilized to transmit measurements from the LP turbine 16. Thus, module lines 34-40 may transmit measurements from separate modules of the turbine system 10.

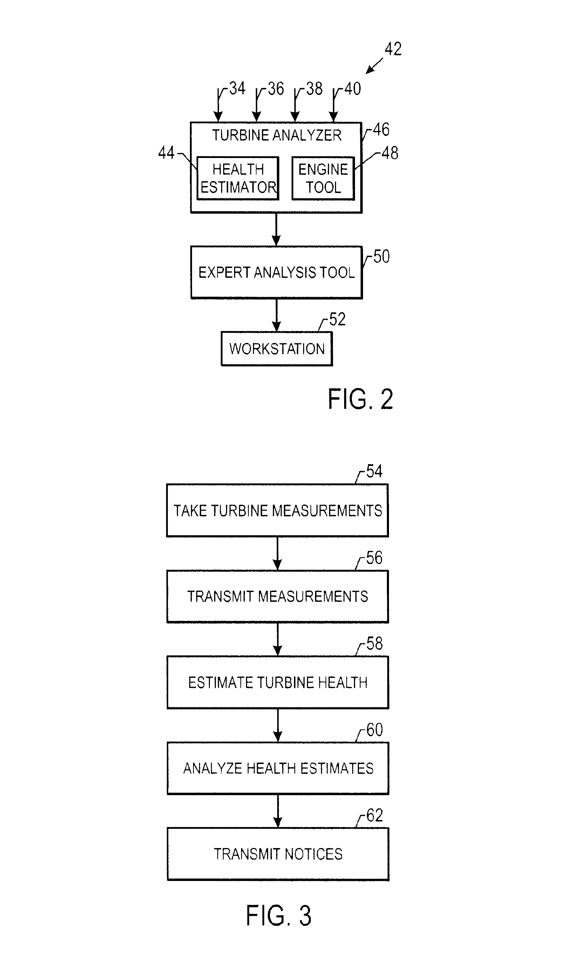

FIG. 2 illustrates health analysis components 42 that may be utilized in conjunction with the turbine system 10. The health analysis components 42 may include a health estimator 44 of a turbine analyzer 46, an engine model 48 of the turbine analyzer 46, an expert analysis tool 50, and a workstation 52. The health estimator 44 receives measurements from the modules of the turbine system 10 via module lines 34-40. These measurements may be recorded and/or processed by the health estimator 44, which may be external to the turbine system 10. In this manner, the health estimator 44 determines one or more module-specific health estimates for one or more of the modules of the turbine system 10 based on the measurements transmitted via module lines 34-40. The measurements may include data representative of, for example, combustor flow, combustor efficiency, HP compressor flow, HP compressor efficiency, LP compressor flow, LP compressor efficiency, HP turbine flow, HP turbine efficiency, LP turbine flow, and LP turbine efficiency for the turbine system 10.

In one embodiment, the health estimator 44 may further utilize parameter identification techniques such as Kalman filtering, tracking filtering, regression mapping, neutral mapping, inverse modeling techniques, or a combination thereof. The filtering may be performed by a modified Kalman filter, an extended Kalman filter, or other filtering algorithm, or alternatively, the filtering may be performed by proportional and integral regulators or other forms of square (n-inputs, n-outputs) or non-square (n-input, m-outputs) regulators. The parameter identification techniques may further include generation of an instant model of the turbine system 10 based on the measurements received from the modules of the turbine system 10. Thus, the health estimator 44 may solve for instantaneous conditions of the turbine system 10 to generate an initial model of the turbine system 10.

Additionally, the health estimator 44 may, for example, receive data corresponding to module measurements either continuously, or at a given sample rate. This sample rate may be, for example, one sample per minute. Regardless of whether the data is received continuously or at a given sample rate, the received data may be used for analysis of the health of the turbine system 10. For example, an automated notice and/or an alarm may be issued based on unexpected received data values corresponding to failure or degradation of modules in the turbine system 10. Additionally, this received data may be used to calculate operating trends of the modules. For example, the received data may be integrated analyzed with previously received data to update a generated model of the turbine system 10. In this manner, trending, or changes over time, of the modules of the turbine system 10 may be recorded for analysis.

For example, the health estimator 44 may represent the health of the HP turbine as a function of the HP turbine blade health, the HP turbine rotor health, and the HP turbine nozzle health. In another example, the health of the HP turbine blade may be represented by the health estimator 44 as a function of the blade tip rub and the blade creep. As stated above, measurements over time may be combined into trends for the HP turbine components. The health estimator 44 may monitor the health status of the modules of the turbine system 10 in this manner.

The health status of the modules of the turbine system 10 may be transmitted to the turbine analyzer 46. The turbine analyzer 46 may evaluate the health status of one or more of the modules of the turbine system 10. In one embodiment, the turbine analyzer 46 may utilize, for example, a physics-based model, a data fitting model (such as a regression model or a neural network model), a rule-based model, and/or an empirical model to evaluate the health status of the one or more modules received from the health estimator 44. A physics-based model, whereby each module of the turbine system 10 is individually modeled, may be used to relate turbine performance degradation parameters to physical wear or usage. Thus, changes in the performance of the specific modules of the turbine system 10 over time, i.e. the module trends, may be compared to an engine model 48 of the turbine analyzer 46, such that the engine model 48 may incorporate an empirical model of the turbine system 10 functioning as intended. Thus, the engine model 48 may provide a baseline from which the health status of the modules of the turbine system 10 may be measured. Thus, in one embodiment, determining a desired level of repair comprises determining the extent of repair needed to achieve a desired level of engine performance associated with the engine model 48. The engine model 48 may further be configured to include optimal values for the levels of repair needed for the engine modules, based on a plurality of optimization criteria. The optimization criteria may include, for example, the overall amount of life-cycle cost associated with the engine repair/overhaul and/or the cost of performing the repair.

The turbine analyzer 46 may transmit any generated results to an analysis tool 50. The analysis tool 50 may be an expert analysis tool that may analyze the results of the module trends. These trends and/or combinations of trends may be utilized by the analysis tool 50 to determine the health of the modules of the turbine system 10, as well as the type of failures occurring in the turbine system 10. For example, a HP compressor module may lose efficiency over time. Based on a comparison of the trends of the HP compressor module with, for example, the efficiency for a HP compressor module from the engine model 48, the analysis tool 50 may determine that the efficiency of the HP compressor 22 is being impacted by dirty blades. Accordingly, a message may be transmitted to the workstation 52 indicating that the HP compressor 22 should be cleaned. In one embodiment, the analysis tool 50 may be one or more look-up charts that may be part of a computer program stored on a machine readable medium, such as a disk drive or memory. Alternatively, the analysis tool 50 may be part of an integrated circuit.

The analysis tool 50 may be programmed to include alarms, repair notices, and/or notices for sensor or module failure. These different results programmed into the analysis tool 50 may represent programmed responses for predicted failure types of the turbine system 10, based on differences between the results transmitted from the health estimator 44 and the engine model 48. The analysis tool 50 may also be updated during the life of the turbine system 10 to adjust the analysis tool 50 prediction algorithm according to the tendencies of the turbine system 10.

As described above, when the analysis tool 50 applies a prediction algorithm to received data from the health estimator 44, a result, such as, a fail notice, an alarm, and/or a repair notice may be issued and transmitted to the workstation 52. The workstation 52 may be physically coupled to the turbine analyzer 46. Alternatively, the workstation 52 may be wirelessly connected to the turbine analyzer. In another embodiment, the workstation 52 may remotely access the turbine analyzer, for example, online via an intranet or an internet connection. The workstation 52 may receive repair notices, alarms, and/or fail notices from the turbine analyzer 46. Based on these received values, a desired level of repair for one or more of the modules of the turbine system 10 may be undertaken. For example, optimal values for the levels of repair needed for the modules, based on a plurality of optimization criteria, may be programmed into the analysis tool 50, such that as overall turbine system 10 efficiency and performance may be improved. For example, if the LP compressor 24 efficiency degradation trend is estimated to be 5% after 5000 hours of use, then the workstation 52 may receive a repair notice outlining the predicted repair necessary to restore the LP compressor 24 efficiency by about 5%. This allows repairs of the turbine system 10 to be performed efficiently. For example, if the health estimate determined for the HP turbine 14 module is found to be normal by the analysis tool 50, then repair to the HP turbine 14 may not be performed, even if other modules of the turbine system 10 require repair. In other words, the workstation 52 may receive information relating to portions of the turbine module 10 that require attention, therefore reducing unnecessary repairs.

FIG. 3 illustrates process steps that may be used for determining if any repairs are necessary to make to the turbine system 10. In step 54, measurements are taken by sensors 30 and 32 regarding operating parameters of modules of the turbine system 10. These measurements are transmitted to the health estimator 44 in step 56. Based on the received measurements, estimates of the operation of the modules of the turbine system 10 are generated in step 58. These estimates are then transmitted to the turbine analyzer 46 for analysis in step 60. This analysis may include utilizing an analysis tool 50, such as an expert tool, to compare the estimates with an engine module 48. Based on the comparison, a prediction may be made as to any repairs or notices that may be sent to the workstation 52 in step 62 or to, for example, controllers of the turbine system 10. Based on the received notice from the turbine analyzer 46, designated repairs on the turbine system 10 may be accomplished. These designated repairs, or corrections, may include repair of the sensors 30 and/or 32, or one or more of the modules of the turbine system 10. These corrections may be made automatically in response to the received notice, for example, controllers coupled to the turbine system 10 may receive the notices and may perform corrective steps, such as reducing the fuel flowing into the combustor 12 or opening a recycle valve in either or both of the compressors 22 and 24 to release excess pressure. The corrections may also be analyzed for later implementation, such as indication of a misplaced sensor to be adjusted, for example, by a user.

For completeness, various aspects of the invention are now set out in the following numbered clauses:
1. A method for planning repair of an engine, comprising:
   monitoring a turbine engine having a plurality of engine modules;
   determining one or more engine module health estimates for one or more of the engine modules based on a plurality of engine parameters, wherein the one or more health estimates comprise trended data;
   determining failure types for the engine modules based on the health estimates; and
   correcting specific failure types.
2. The method of clause 1, comprising predicting repairs based on the failure types.
3. The method of clause 2, comprising transmitting the predicted repairs to a workstation.
4. The method of clause 3, wherein the transmission of the predicted repairs to the workstation is performed via an intranet connection or via a physical connection to a turbine analyzer of the turbine engine.
5. The method of clause 1, comprising transmitting a notification of a failure of one or more engine module sensors to a workstation based on the failure types.
6. The method of clause 5, wherein the notification is an alarm.
7. The method of clause 1, wherein determining failure types comprises predicting module and sensor failures.
8. The method of clause 7, comprising utilizing an expert analysis tool to predict the module and sensor failures and to transmit notices of the failures for correcting specific failure types.
9. The method of clause 8, comprising updating the expert analysis tool during the life of the turbine engine.
10. The method of clause 1, wherein the engine parameters comprises at least one of exhaust gas temperature, rotor speeds, turbine temperature, engine pressure, gas temperature, engine fuel flow, core speed, compressor discharge pressure, or turbine exhaust pressure related to the turbine engine.
11. The method of clause 1, wherein the one or more engine module health estimates comprises at least one of a combustor flow, a combustor efficiency, a HP compressor flow, a HP compressor efficiency, a LP compressor flow, a LP compressor efficiency, a HP turbine flow function, a HP turbine efficiency, a LP turbine flow function or a LP turbine efficiency related to the turbine engine.
12. The method of clause 1, wherein determining one or more engine module health estimates comprises determining a desired engine module performance level for one or more of the engine modules of the turbine engine.
13. A system for monitoring an engine, comprising:
   an engine health estimator configured to determine one or more health estimates for one or more modules of the engine based on a plurality of engine parameters, wherein the one or more health estimates comprise trended data; and
   a turbine analyzer configured to analyze the one or more health estimates to determine failure types for the engine modules.
14. The system of clause 13, comprising a workstation configured to receive notifications corresponding to the failure types for the engine modules.
15. The system of clause 13, wherein the turbine analyzer is configured to determine failure of one or more turbine module sensors to transmit one or more notices of the failure for correction of the failure.
16. The system of clause 15, wherein the turbine analyzer comprises an engine module configured to contain an empirical model of the turbine engine functioning at peak efficiency.
17. The system of clause 16, wherein the turbine analyzer comprises an analysis tool configured to predict the module and sensor failures based on the engine module and the one or more health estimates.
18. A turbine system, comprising:
   one or more engine modules;
   one or more sensors adapted to measure engine parameters for the one or more engine modules;
   an engine health estimator configured to determine one or more health estimates for the one or more engine modules based the measured engine parameters, wherein the one or more health estimates comprise trended data; and
   a turbine analyzer configured to analyze the one or more health estimates to determine failure types for the engine modules.
19. The system of clause 18, wherein the turbine analyzer comprises an engine module configured to contain an empirical model of the turbine engine functioning at peak efficiency.
20. The system of clause 19, wherein the turbine analyzer comprises an analysis tool configured to predict failures of the engine modules and failures of the sensors based on the engine module and the one or more health estimates.

## Claims

1. A method for the repair of an engine, comprising:
monitoring a turbine engine having a plurality of engine modules;
determining one or more engine module health estimates for one or more of the engine modules based on a plurality of engine parameters, wherein the one or more health estimates comprise trended data;
determining failure types for the engine modules based on the health estimates; and
correcting specific failure types.

2. The method of claim 1, wherein determining failure types comprises predicting module and sensor failures.

3. The method of claim 2, comprising utilizing an expert analysis tool to predict the module and sensor failures and to transmit notices of the failures for correcting specific failure types.

4. The method of any of the preceding claims, wherein the engine parameters comprises at least one of exhaust gas temperature, rotor speeds, turbine temperature, engine pressure, gas temperature, engine fuel flow, core speed, compressor discharge pressure, or turbine exhaust pressure related to the turbine engine.

5. The method of any of the preceding claims, wherein the one or more engine module health estimates comprises at least one of a combustor flow, a combustor efficiency, a HP compressor flow, a HP compressor efficiency, a LP compressor flow, a LP compressor efficiency, a HP turbine flow function, a HP turbine efficiency, a LP turbine flow function or a LP turbine efficiency related to the turbine engine.

6. The method of any of the preceding claims, wherein determining one or more engine module health estimates comprises determining a desired engine module performance level for one or more of the engine modules of the turbine engine.

7. A system for monitoring an engine, comprising:
an engine health estimator configured to determine one or more health estimates for one or more modules of the engine based on a plurality of engine parameters, wherein the one or more health estimates comprise trended data; and
a turbine analyzer configured to analyze the one or more health estimates to determine failure types for the engine modules.

8. A turbine system, comprising:
one or more engine modules;
one or more sensors adapted to measure engine parameters for the one or more engine modules;
an engine health estimator configured to determine one or more health estimates for the one or more engine modules based the measured engine parameters, wherein the one or more health estimates comprise trended data; and
a turbine analyzer configured to analyze the one or more health estimates to determine failure types for the engine modules.

9. The system of claim 8, wherein the turbine analyzer comprises an engine module configured to contain an empirical model of the turbine engine functioning at peak efficiency.

10. The system of claim 9, wherein the turbine analyzer comprises an analysis tool configured to predict failures of the engine modules and failures of the sensors based on the engine module and the one or more health estimates.
